(19) Europäisches Patentamt
European Patent Office
Office européen des brevets

(11) **EP 2 083 579 B1**

(12) **EUROPEAN PATENT SPECIFICATION**

(45) Date of publication and mention
of the grant of the patent:
**12.02.2014 Bulletin 2014/07**

(51) Int Cl.:
***H04W 60/00*** [(2009.01)]

(21) Application number: **07817147.7**

(22) Date of filing: **25.10.2007**

(86) International application number:
**PCT/CN2007/070956**

(87) International publication number:
**WO 2008/049376 (02.05.2008 Gazette 2008/18)**

(54) **PROCESSING LOCATION UPDATE REQUEST METHOD, NETWORK ENTITY, CONGESTION CONTROL METHOD AND APPARATUS**

VERFAHREN ZUR VERARBEITUNG EINER LOKALISIERUNGSAKTUALISIERUNGSANFORDERUNG, NETZWERKENTITÄT, STAUREGELVERFAHREN UND VORRICHTUNG

PROCÉDÉ DE TRAITEMENT DE DEMANDE DE MISE À JOUR D'EMPLACEMENT, ENTITÉ DE RÉSEAU, PROCÉDÉ ET APPAREIL DE GESTION D'ENCOMBREMENT

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **25.10.2006 CN 200610149982**
**13.12.2006 CN 200610167204**

(43) Date of publication of application:
**29.07.2009 Bulletin 2009/31**

(73) Proprietor: **Huawei Technologies Co., Ltd.**
**Longgang District, Shenzhen**
**Guangdong 518129 (CN)**

(72) Inventors:
• **ZHU, Haopeng**
**Shenzhen Guangdong 518129 (CN)**
• **KONG, Jie**
**Shenzhen Guangdong 518129 (CN)**
• **JIN, Bo**
**Shenzhen Guangdong 518129 (CN)**
• **REN, Hongfang**
**Shenzhen Guangdong 518129 (CN)**

(74) Representative: **Pfenning, Meinig & Partner GbR**
**Patent- und Rechtsanwälte**
**Theresienhöhe 13**
**80339 München (DE)**

(56) References cited:
**WO-A1-01/97548          CN-A- 1 373 980**
**CN-A- 1 710 982         US-A1- 2001 055 313**
**US-A1- 2003 027 571**

**Description**

**FIELD OF THE INVENTION**

The present invention relates to the filed of communication technologies, in particular to a method and a network entity for handling location update request, and a method and a device for controlling congestion in service network.

**BACKGROUND OF THE INVENTION**

Presently, with the development of communication and network techniques, people's demands for mobile information services grow increasingly. Due to rapid growth of mobile users, impact of heavy traffic load on network elements (NEs) cannot be ignored increasingly. For example, in peak hours of telephone use in traditional holidays and festivals or working days, phone calls are often obstructed, mainly because the traffic load in peak hours exceeds the designed load capacity of the communication equipment and systems, and this causes a call congestion on the communication equipment in a large area, dropped call completion ratio, and even failures of the communication equipment. That is to say, the impact of heavy traffic load on network elements has increasingly become a problem that cannot be neglected. The heavy traffic load may cause under-layer link congestion, random loss of packets, and service interruption of a large number of users.

In addition, most of the existing flow control techniques are used to fight against link congestion mainly based on under-layers (e.g., MTP3 layer), and employ, for example, leak bucket technique to discard messages simply to attain the purpose of mitigating link congestion. Such a packet discard approach has high randomness and arbitrariness characteristic. Since the service interaction between NEs is completed by exchanging a series of messages, such a random and arbitrary packet discard strategy will affect normal operation of services, and even cause serious problems such as service interruption and network destruction, etc

In such a context, flow control techniques have become a hot spot of study in the industry. However, after the flow control function is activated, it can only mitigate link congestion in an orderly manner, but cannot solve the problem of termination of the user service procedure, no matter whether an under-layer packet discarding method or an upper-layer transaction interruption method is employed.

In the prior art, the link congestion condition at the network side is directly reflected to the Mobile Stations (MSs). For example, after an MS initiates a location update request message: the flow control function is activated at the network side, and the packet of the request message is discarded by the flow control function; or, the flow control function is activated at the network but the link is congested, though the packet of the request message is not discarded by the flow control function; or, the flow control function is not activated at the network side but the link is congested. In any of the cases, the location update will fail. After the location update fails, the MS will initiate a location update request message again, and cause persistent network congestion. Consequently, the user will fall into the following awkward situation: though the MS searches for the network continuously, it cannot access the network. Apparently, such a case will bring awkward experience to the user.

In conclusion, when an MS initiates a location update request, the existing flow control techniques are too simple to eliminate possible persistent network congestion problem for the MS, and therefore may cause degraded experience of the user.

WO002001097548A1 discloses an invention. The invention relates to a method and system for performing a location registration in a cellular communication network.

**SUMMARY OF THE INVENTION**

In embodiments of the present invention, a method and a network entity for handling location update requests are provided, in order to avoid link congestion and improve the user's experience when an MS initiates a location update request.

In the embodiments of the present invention, a method and a device for controlling congestion in wireless communication system are provided, in order to implement automatic flow control for link congestion and reduce the adverse effect of link congestion to the services,

In order to solve the above technical problems, a method for handling location update request between a MS and a network side is provided in the embodiments of the present invention; the method includes the following steps: receiving, by the network side, a location update request initiated from the MS; detecting, by the network side, the current link congestion condition at the network side,, and activating flow control function according to the link congestion condition; judging (s3), by the network side, whether a predefined rule is met, if the location update request is discarded by the flow control function; and responding, by the network side, to the MS with a location update accept message if the predefined rule is met.

A network entity is provided in the embodiments of the present invention, including:

a receiving unit, adapted to receive the location update request from an MS; a detecting unit, adapted to detect the current link congestion condition at the network side; a judging unit, adapted to judge whether the location update request is discarded by the flow control function after the flow control function is activated according to the link congestion condition, and, if the location update request is discarded and location update is not allowed for the MS, further judge whether a predefined rule is met; and a responding unit, adapted to respond to the MS with a location update accept message, if the judging unit judges the predefined rule is met.

If the current link congestion condition is detected and the activation or deactivation of the flow control function according to the current link congestion condition fails, location update for the MS will not be allowed.

It is seen from the technical scheme described above, in the embodiments of the present invention, when the location update request initiated from an MS is received, the current link congestion condition is detected first; then, when the flow control function is activated according to the link congestion condition, if it is judged the location update request is discarded by the flow control function and it is forbidden to carry out location update for the MS, then it is further judged whether the predefined rule is met; if the rule is met, the MS is responded with a location update accept message, so that the MS will not initiate a further location update request temporarily; this makes the user feel that he/she has connected to the network, and thereby can improve the user's experience and save network resources.

In addition, in the embodiments of the present invention, the link congestion condition is sensed in the process of the service message interaction between the equipment at local end and the equipment at opposite end, and the flow control function is activated or deactivated according to the link congestion condition, i.e., the network equipment can carry out automatic flow control according to the link congestion condition. That approach ensures the network equipment can still operate normally without system halt, even if there is heavy traffic load on the link, and thereby effectively improves network reliability. Moreover, service messages can be discarded selectively according to the service flow when the messages are discarded in combination with the service flow, and thereby can minimize the price of service loss.

## BRIEF DESCRIPTION OF THE DRAWINGS

Figure 1 is a flow diagram of the method for handling location update request according to an embodiment of the present invention;

Figure 2 is a signaling flow diagram of a method for handling location update request according to a first embodiment of the present invention;

Figure 3 is a signaling flow diagram of a method for handling location update request according to a second embodiment of the present invention;

Figure 4 is a signaling flow diagram of a method for handling location update request according to a third embodiment of the present invention;

Figure 5 is a structural diagram of the network entity according to a first embodiment of the present invention;

Figure 6 is a structural diagram of the network entity according to a second embodiment of the present invention;

Figure 7 is a structural diagram of the network entity according to a third embodiment of the present invention;

Figure 8 is a flow diagram of the method for controlling service network congestion according to an embodiment of the present invention;

Figure 9 is a flow diagram of discarding messages in accordance with the link congestion ratio according to an embodiment of the present invention;

Figure 10 is a flow diagram of the method for controlling service network congestion in a MAP location update application according to an embodiment of the present invention;

Figure 11 is a principle block diagram of the device for controlling service network congestion according to a first embodiment of the present invention; and

Figure 12 is a principle block diagram of the device for controlling service network congestion according to a second embodiment of the present invention

## DETAILED DESCRIPTION OF THE EMBODIMENTS

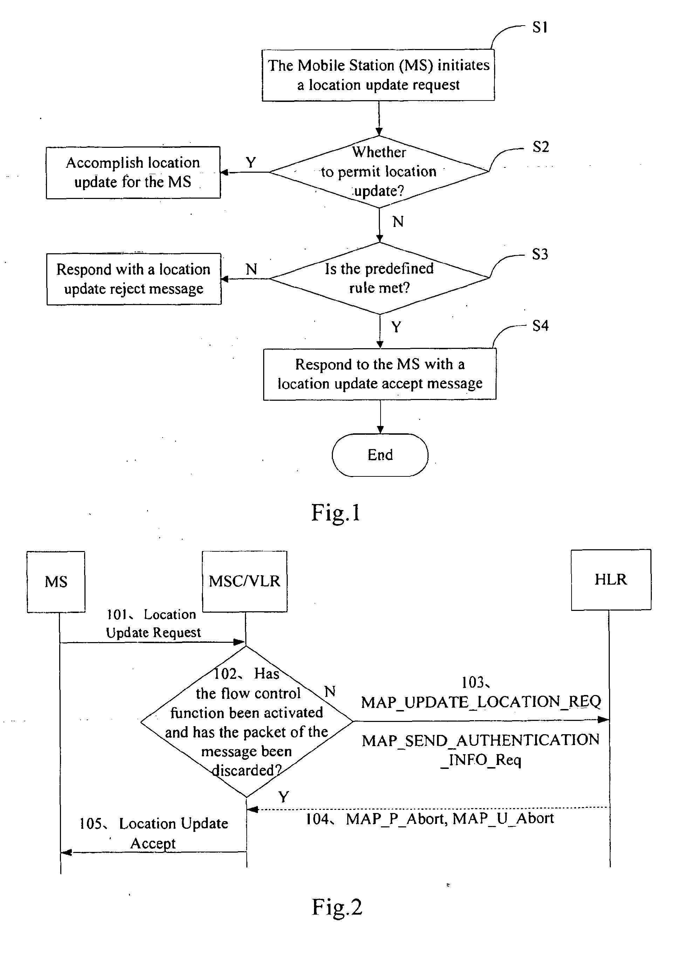

In the embodiments of the present invention, a method for handling location update request is provided, which is applicable to location update in a CDMA or GSM/UMTS mobile communication system or other systems, such as the UE registration process in an IMS network, in order to make the user intangible to link congestion at the network side and thereby improve the user's experience and save network resources when the MS initiates a location update request while the link at the network side is congested. As shown in Figure 1, the method includes the following steps:

Step S1: The MS initiates a location update request.

Step S2: The network side judges whether location update for the MS is allowed currently; if the location update for the MS is not allowed, the process proceeds to Step S3; otherwise, the location update for the MS is accomplished;

That it to say, when judging whether the location update for the MS is allowed currently, the network side detects the current link congestion condition first and activates the flow control function according to the link congestion condition; then, the network side judges whether the location update request is discarded by the flow control function; if the location update request is discarded by the flow control function, the location update for the MS is not allowed; otherwise the network side carries out location update for the MS.

Step S3: The network side judges whether the predefined rule is met; if the rule is met, the process proceeds to Step S4; otherwise, the network side responds to the MS with a location update reject message.

Step S4: The network side responds to the MS with a location update accept message.

In Step S1, the cases that the MS initiates a location update request include, but are not limited to the following:

Case 1: The MS boots up.

Case 2: The MS is in a pseudo online state after Step S1~S4 (i.e., when the link at the network side is congested, the user is given an illusion that the MS has connected to the network, but actually the authentication and registration operations have not been accomplished for the MS at the network side); after that, as the geographical location of the MS is updated (e.g., the MS is in roaming state), the MS will carry out location update automatically to the network side.

Case 3: After Step S1-S4, the MS is in a pseudo online state; and after that, the MS initiates a service request (e.g., makes a call), in that case, the MS carries out location update automatically to the network side to access the network.

In Step S2, after receiving the location update request message from the MS, the network side judges whether location update for the MS is allowed currently according to the following rule.

The rule for the judgment is as follows:

First, it is judged whether the flow control function has been activated at the network side; if the flow control function has been activated and the packet of the location update request message has been discarded by the flow control function, it is determined that the location update for the MS is not allowed currently, and the process proceeds to Step S3; if the flow control function has been activated but it is unnecessary to carry out flow control for the packets of the location update request message, then subsequent judgment is made; if the flow control function is not activated, then subsequent judgment is made.

Second, it is judged whether there occurs link congestion and/or link failure at the network side; if link congestion and/or link failure at the network side occurs, it is determined that location update for the MS is not allowed currently, and Step S3 is proceeded; otherwise it is determined that the location update for the MS is allowed currently, i.e., the MS is responded with a location update accept message, and authentication and registration procedures are performed for the MS according to the method in the prior art.

In Step S3, the network side judges whether the predefined rule is met; if the rule is met, the process proceeds to Step S4; otherwise, the network side responds to the MS with a location update reject message.

The network side can choose a rule from the predefined rules to carry out judgment according to the policies; if the predefined rule is met, the process proceeds to Step S4; otherwise, the network side responds to the MS with a location update reject message.

In Step S3, the predefined rules include, but are not limited to the following:

Rule 1: responding to the MS with a location update accept message directly.

Rule 2: if pseudo online state is permitted (i.e., the pseudo online function is activated according to the condition of the local cell, and the number of MSs in pseudo online state in the cell is less than the preset threshold), responding to the MS with a location update accept message.

Rule 3: if pseudo online state is permitted and the current MS is permitted to roam, responding to the MS with a location update accept message.

In Step S4, after the MS receives the location update accept message, the user will believe that the MS has connected to the network, and will not initiate a further location update request temporarily (i.e., the MS enters into pseudo online state), and the user of the MS is intangible to the link congestion condition at the network side; the network side carries out subsequent flow control with the method in the prior art. The MS will not initiate a further location update request until the condition for initiating a location update request described in Step S1 is met; and so on.

Hereunder the method provided in the present invention will be described in three embodiments.

Embodiment 1: An MS initiates a location update request at the beginning (e.g., the MS boots up). As shown in Figure 2, the method includes the following steps:

Step 101: The MS sends a location update request message to the Mobile Switching Center (MSC)/Visit Location Register (VLR).

Step 102: The MSC/VLR judges whether the flow control function has been activated and whether the packets of the location update request message have been discarded by the flow control function; if the flow control function has been activated and the packets of the location update request message have been discarded by the flow control function, the process proceeds to Step 105; otherwise, the process proceeds to Step 103.

Step 103: The MSC/VLR sends a MAP_UPDATE_LOCATION_REQ message or a MAP_SEND_AUTHENTICATION_INFO_REQ message to the Home Location Register (HLR).

Step 104: If there occurs link congestion and/or link failure currently, the HLR returns a MAP_P_ABORT_IND, MAP_U_ABORT_IND, or MAP_NOTICE_IND message from the under-layer to the MSC/VLR.

Step 105: The MSCNLR responds to the MS with a location update accept message.

The predefined rule in this embodiment of the method is in accordance with the Rule I described in Step S3; and the Rule 2 and Rule 3 in Step S3 are also applicable to this embodiment.

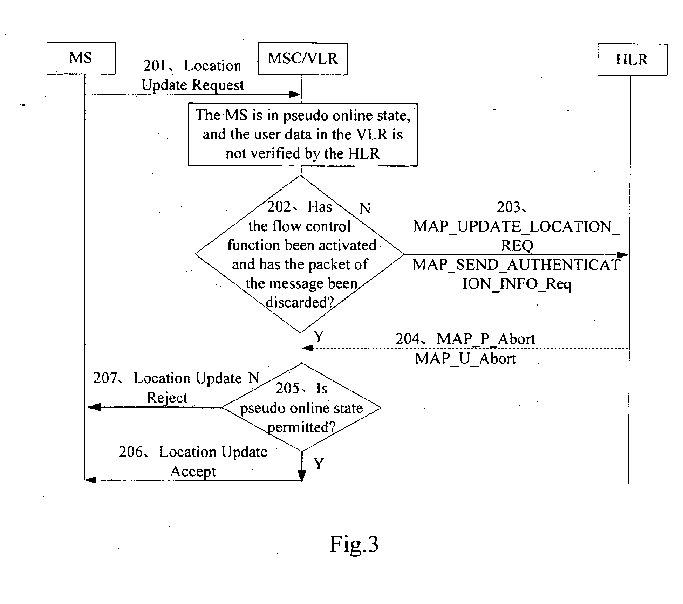

Embodiment 2: An MS is in pseudo online state, and carries out location update again. As shown in Figure 3, the method includes the following steps:

Step 201: The MS in pseudo online state initiates a location update request again.

Step 202: The user data stored in the VLR for the MS in pseudo online state is not verified by the HLR, and no authentication set exists for the MS. Since no secret user who has not been authenticated is permitted and no discrepancy to the data state in the HLR is permitted, when the MS in pseudo online state initiates a location update request again, the MSC/VLR judges whether the flow control function has been activated and whether the packets of the location update request message have been discarded by the flow control function; if the flow control function has been activated and the packets of the location update request message have been discarded by the flow control function, the process proceeds to Step 205; otherwise, the process proceeds to Step 203, so that the VLR retrieves the authentication set (MAP_SEND_AUTHENTICATION_INFO_REQ) from the HLR, or the VLR initiates a location update request (MAP_UPDATE_LOCATION_REQ) to the HLR.

Step 203: The MSC/VLR sends a MAP_UPDATE_LOCATION_REQ or MAP_SEND_AUTHENTICATION_INFO_REQ message to the HLR.

Step 204: If there is link congestion and/or link failure currently, the HLR returns a MAP_P_ABORT_IND, MAP_U_ABORT_IND, or MAP_NOTICE_IND message from the under-layer to the MSC/VLR.

Step 205: The MSC/VLR judges whether the pseudo online function has been activated in the local cell where the MS is; if the pseudo online function has been activated, the MSCNLR further judges whether the number of MSs in pseudo state in the cell is less than the preset threshold; if the number of MSs in pseudo state in the cell is less than the preset threshold, the MSCNLR determines to permit the MS to enter into pseudo online state, and the process proceeds to Step 206; otherwise, the process proceeds to Step 207.

Step 206: The MSC/VLR responds to the MS with a location update accept message.

Step 207: The MSC/VLR responds to the MS with a location update reject message.

The predefined rule in this embodiment of the method is in accordance with the Rule 2 described in Step S3; and the Rule 1 and Rule 3 in Step S3 are also applicable to this embodiment.

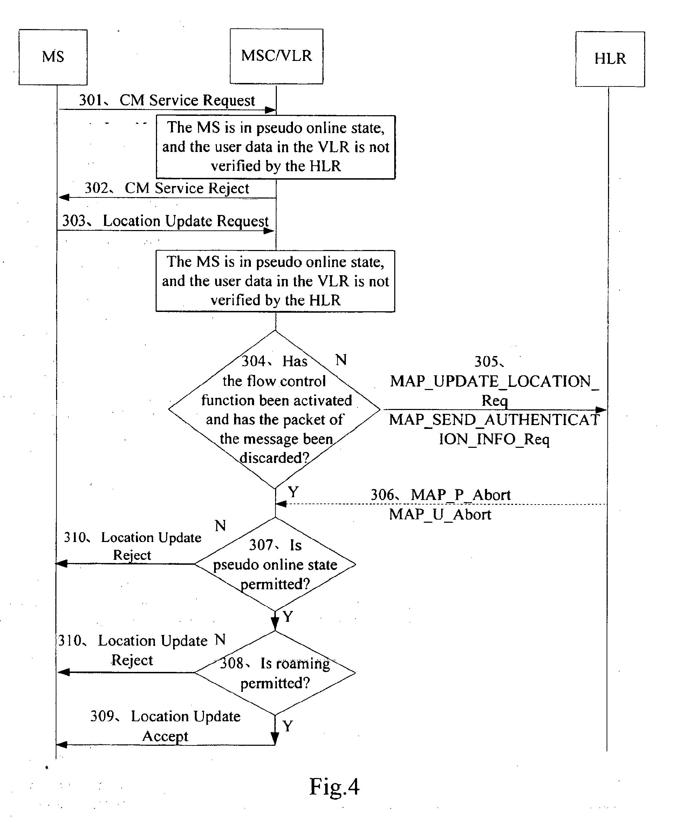

Embodiment 3: An MS in pseudo online state initiates a service request. As shown in Figure 4, the method includes the following steps:

Step 301: An MS in pseudo online state initiates a service request actively.

Step 302: The user data stored in the VLR for the MS in pseudo online state is not verified by the HLR, and no authentication set exists for the MS. Since no service of the secret user who has not been authenticated is permitted and no discrepancy to the data state in the HLR is permitted, and also the user is not permitted to bypass the calling restriction to use the service and thereby bring adverse effect to the service, when the MS in pseudo online state initiates a service request actively, the MSC/VLR will reject the Connect management (CM) service request from the MS.

Step 303: After receiving the CM service reject message, the MS initiates a location update request actively.

Step 304: The user data stored in the VLR for the MS in pseudo online state is not verified by the HLR, and no authentication set exists for the MS. Since no secret user who has not been authenticated is permitted and no discrepancy to the data state in the HLR is permitted, when the MS in pseudo online state initiates a location update request again, the MSCNLR judges whether the flow control function has been activated and whether the packets of the location update request message have been discarded by the flow control function; if the flow control function has been activated and the packets of the location update request message have been discarded by the flow control function, the process proceeds to Step 307; otherwise, the process proceeds to Step 305, so that the VLR retrieves the authentication set (MAP_SEND_AUTHENTICATION_INFO_REQ) from the HLR, or the VLR initiates a location update request (MAP_UPDATE_LOCATION_REQ) to the HLR.

Step 305: The MSC/VLR sends a MAP_UPDATE_LOCATION_REQ or MAP_SEND_AUTHENTICATION_INFO_REQ message to the HLR.

Step 306: If there is link congestion and/or link failure at present, the HLR returns a MAP_P_ABORT_IND, MAP_U_ABORT_IND, or MAP_NOTICE_IND message from the under-layer to the MSC/VLR.

Step 307: The MSCNLR judges whether the pseudo online function has been activated in the local cell where the MS is; if the pseudo online function has been activated, the MSC/VLR further judges whether the number of MSs in pseudo state in the cell is less than the preset threshold; if the number of MSs in pseudo state in the cell is less than the preset threshold, the MSC/VLR determines to permit the MS to enter into pseudo online state, and the process proceeds to Step 308; otherwise, the process proceeds to Step 310.

Step 308: The MSCNLR judges whether to permit the MS to roam in the local VLR currently; if it is permitted the MS to roam in the local VLR currently, the process proceeds to Step 309; otherwise, the process proceeds to Step 310.

Step 309: The MSC/VLR responds to the MS with a location update accept message.

Step 310: The MSC/VLR responds to the MS with a location update reject message.

The predefined rule in this embodiment of the method is in accordance with the Rule 3 described in Step S3; also, the Rule 1 and Rule 2 in Step S3 are also applicable to this embodiment.

Preferably, after the network side receives the location update request message from the MS, the method can further include the following step, before the network side determines to carry out location update for the MS:

judging whether to control the congestion in the current service network; if the congestion in the current service network is to be controlled, sensing the link congestion condition in the process of the service message interaction between the equipment at local end and the equipment at opposite end, and activating or deactivating the flow control according to the link congestion condition, and discarding the first message of service to be sent to the equipment at opposite end when the flow control function is activated.

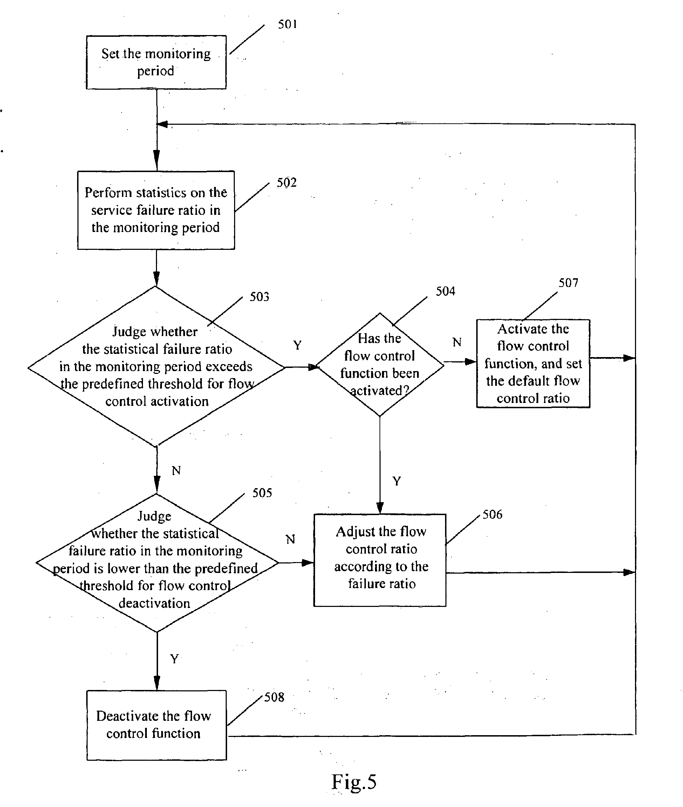

Wherein, the process of sensing the link congestion condition between the equipment at local end and the equipment at opposite end is shown in Figure 5, and specifically includes the following steps:

Step 501: The monitoring period is set.

The monitoring period can be set flexibly according to the actual network condition, for example, the period can be set to 10s; in addition, the periods can be successive or at a certain interval (e.g., 2s). In the actual implementation, the period can be controlled with a monitoring timer.

Step 502: Performing statistics on the service failure ratio in the monitoring period.

In the present invention, the flow control is implemented on the basis of the service, and the timeout of service message interaction is monitored; for example, a counter can be used to count the messages that involve receiving timeout. When a monitoring period starts, the counter begins to count; once a message timeout event occurs, it indicates the service has failed, and the counter will increase by 1. In addition, another counter is used to count the success ratio of the service. Once the entire process of service handling is accomplished, the counter will increase by 1. In this way, the service failure ratio in a monitoring period can be ascertained according to the statistical results of the two counters. For example, the service failure ratio can be calculated with the following formula.

$$\text{failure ratio} = \text{timeout count} / (\text{timeout count} + \text{service success count})$$

Due to the fact that the message interaction timeout condition reflects the link congestion condition, the service failure ratio obtained from above formula reflects the link congestion condition.

When a monitoring period starts, the counter that counts message timeout events and the counter that counts service success events begin to count. In this way, the timeout ratios perceived by the congestion sensing timers corresponding to all services on the equipment at local end can be obtained accurately in each monitoring period.

Step 503: It is judged whether the statistical failure ratio in the current monitoring period exceeds the predefined flow control activation threshold. If the failure ratio exceeds the predefined flow control activation threshold, the process proceeds to Step504; otherwise, the process proceeds to Step505.

Step 504: It is judged whether the flow control function has been activated. If the flow control function has been activated, the process proceeds to Step506; otherwise, the process proceeds to Step507.

Step 505: It is judged whether the statistical timeout ratio in the monitoring period is lower than the predefined threshold for flow control deactivation. If the timeout ratio is lower than the predefined threshold for flow control deactivation, the process proceeds to Step508; otherwise, the process proceeds to Step 506.

Step 506: The flow control ratio is adjusted according to the failure ratio. Then, the process returns to Step 502 to monitor the next period.

Step 507: The flow control function is activated, and the flow control ratio is set to the default value. Then, the process returns to Step 502 to monitor the next period.

In order to achieve smooth adjustment of the service flow, after the flow control function is activated, a part of the service flow can be permitted to pass, that is to say, a flow control ratio is set. For example, the flow control ratio can be set to 50%, which indicates the first 10 messages in every 20 messages will be discarded, while the rest 10 messages will be sent normally.

Step 508: The flow control function is deactivated: Then, the process returns to Step 502 to monitor the next period.

In above process, the flow control activation threshold and the flow control deactivation threshold can be set according to the system simulation result or empirical values.

After the flow control function is activated in Step 507, the first message of service to be sent from the equipment at local end to the equipment at opposite end can be discarded according to the flow control ratio. A default flow control ratio can be used for discarding service messages. That is to say, whenever link congestion occurs, the first message of service to be sent from the equipment at local end to the equipment at opposite end can be discarded according to the default flow control ratio. In this way, if the adjustment in one flow control cycle cannot eliminate the link congestion and the link congestion still remains in the next monitoring period, the service messages to be sent can be discarded further according to the monitoring result.

In order to further improve the flow control efficiency, the flow control ratio can be determined according to the link congestion condition, and then the service message discard ratio can be determined according to the flow control ratio. The higher the flow control ratio is, the higher the message discard ratio will be. The Step 506 in Figure 5 shows such a case.

In the implementation, different flow control ratios can be set according to the link congestion degree. After the flow control function is activated, the first message of service to be sent from the equipment at local end to the equipment at opposite end can be discarded according to the current flow control ratio for the link. Thus, after a monitoring period, the congestion can be eliminated essentially, and the link will recover to normal.

For example, the adjustment can be carried out with the following policies for adjustment of the flow control ratio:

If the statistical timeout ratios in two successive monitoring periods exceed the predefined threshold for flow control ratio adjustment, that is to say, the variation of timeout ratio in the monitoring periods is monitored, and if the statistical timeout ratio in the previous monitoring period and the statistical timeout ratio in the current monitoring period exceed the predefined threshold for flow control ratio adjustment, the flow control ratio must be increased;

If the statistical timeout ratio in the previous monitoring period is lower than the predefined threshold for flow control ratio adjustment, the flow control ratio can be decreased.

The threshold for flow control ratio adjustment can be set according to the system simulation result or empirical values.

When discarding service messages, it is presumed that all services have the same priority, that is to say, after the flow control function is activated, the service messages can be discarded in sequence of being sent.

In order to provide differentiated services according to service types, the services can be classified, and priorities corresponding to the service types can be set, so that the service messages with lower priority will be discarded first, after the flow control function is activated. Such an approach can ensure QoS of important services.

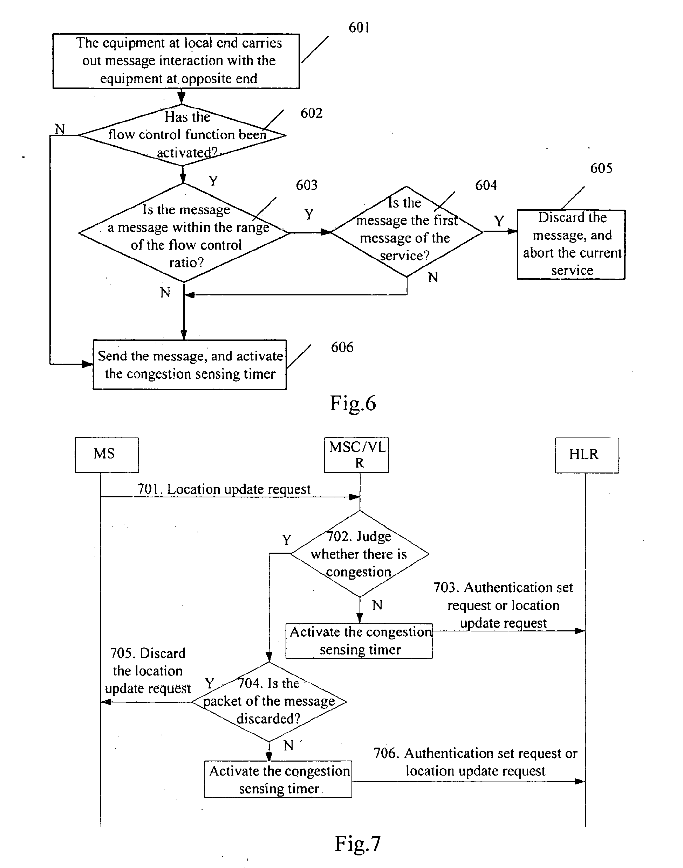

Wherein, the process of discarding service messages according to the service failure ratio is shown in Figure 6. The process includes the following steps.

Step 601: The equipment at local end carries out service message interaction with the equipment at opposite end.

Step 602: It is judged whether the flow control function has been activated. If the flow control function has been activated, the process proceeds to Step 603; otherwise, the process proceeds to Step 606.

Step 603: It is judged whether the message is a service message within the range of the flow control ratio. If the message is within the range of the flow control ratio, the process proceeds to Step 604; otherwise, the process proceeds to Step 606.

Step 604: It is judged whether the message is the first message with which the service is started. If the message is the first message, the process proceeds to Step 605; otherwise, the process proceeds to Step 606.

Step 605: The message is discarded, and the current service aborts.

Step 606: The message is sent, and the congestion sensing timer is activated to monitor whether the message times out.

In order to further improve the flow control efficiency, a flow control ratio can be determined according to the link congestion condition, and then a service message discard ratio can be determined according to the flow control ratio. The higher the flow control ratio is, the higher the message discard ratio will be.

In the implementation, different flow control ratios can be set according to the link congestion degree. After the flow control function is activated, the first message of service to be sent from the equipment at local end to the equipment at opposite end can be discarded according to the current flow control ratio for the link. Thus, after a monitoring period, the congestion can be eliminated essentially, and the link will recover to normal. Besides, an initial value can be set for the flow control ratio; after the flow control function is activated, the current flow control ratio can be adjusted in real time according to the variation of timeout ratio of the congestion sensing timer in successive monitoring periods. Then, the equipment at local end can determine whether the message to be sent is a message within the range of the flow control ratio according to the current flow control ratio for the link; if the message is within the range of the flow control ratio, it will be discarded. Obviously, the higher the flow control ratio is, the higher the probability of discarding the message will be.

The present invention can be applied in any network where service message interaction is required, for example, the present invention can be used for Mobile Application Part (MAP) and CAMEL Application Part (CAP) transaction processing.

Those skilled in the art know that: MAP is an interface protocol for interworking between mobile communication systems, and it involves the signaling linkage with other entities in the system around the MSC, for example, the connection with another MSCNLR, HLR, Authentication Center (AC), or Short Message Center (SMC) and the connections between entities in the system. The protocol is used for communication between entities, such as location registration/cancellation, handling of supplementary services, querying and handover of subscriber parameters during call setup process, subscriber management, operation and maintenance, failure recovery of location register, International Mobile Equipment Identity (IMEI) management and authentication, and procedures that support short messaging service, etc. In these service flows, the present invention can be utilized to effectively control link flow and prevent link congestion.

For example, in the location update service for mobile stations, the MSC has to interact with the HLR at two interaction points: one point is for retrieving the authentication set, and the other point is for sending the location update request. At the two interaction points, the corresponding congestion sensing timer is activated to sense the link congestion condition.

The application flow of the embodiment of the present invention is shown in Figure 7, and includes the following steps.

Step 701: An MS sends a location update request message to the MSCNLR.

Step 702: After the MSCNLR receives the location update request message, it sends to the HLR a message for retrieving the authentication set or a location update request message. Before sending the message, the MSC/VLR judges first whether flow control is required according to the link congestion condition; if the link is not congested, i.e., no flow control is required, the MSCNLR executes Step 703; if flow control is required, the MSCNLR executes Step 704.

Step 703: The MSCNLR performs the normal processing flow by sending an authentication set request message or location update request message to the HLR and activating the congestion sensing timer at the same time to monitor whether the message times out.

Step 704: The MSC judges whether to discard the message according to the current flow control ratio for the link. If the message is to be discarded, the MSC executes Step 705; otherwise the MSC executes Step 706.

Step 705: The MSC discards the message, and responds to the MS with a location update failure message.

Step 706: The MSC sends an authentication set request message or a location update request message to the HLR, and activates the congestion sensing timer at the same time to monitor whether the message times out.

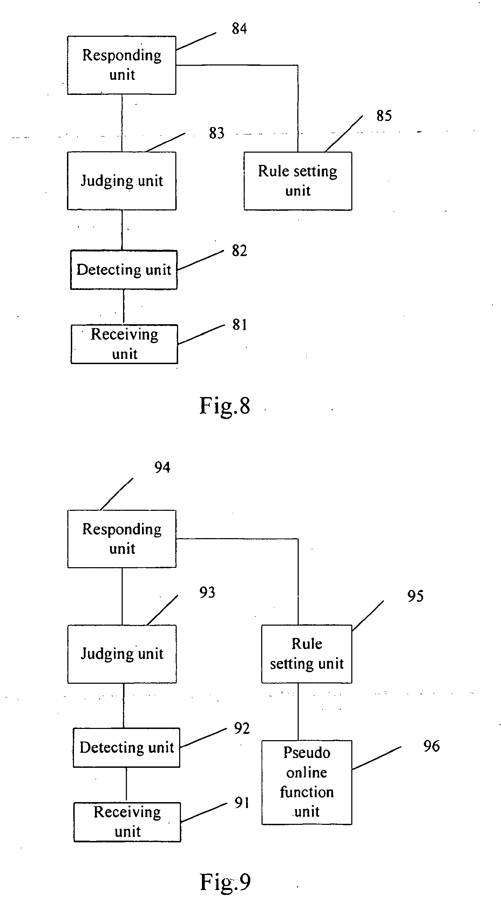

In the present invention, a network entity is also provided. As shown in Figure 8, the network entity includes: a receiving unit 81, a detecting unit 82, a judging unit 83, and a responding unit 84. Preferably, the network entity further includes a rule setting unit 85. Wherein, the receiving unit 81 is adapted to receive the location update request from the MS; the detecting unit 82 is adapted to detect the current link congestion condition; the judging unit 83 is adapted to judge whether the location update request is discarded by the flow control function after the flow control function is activated according to the link congestion condition, and further judge whether the MS meets the predefined rule, if the location update request is discarded, and thereby location update for the MS will not be permitted; the responding unit 84 is adapted to respond to the MS with a location update accept message, if the judging unit determines the MS meets the predefined rule.

The rule setting unit 85 is adapted to store the predefined rules, so that the network entity can choose any of the predefined rules according to the policies to carry out judgment. The rule 1 is: the network entity responds to the MS with a location update accept message directly. Based on the rule 2, the network entity further includes a pseudo online function unit, which is adapted to activate or deactivate the pseudo online function, and, after the pseudo online function is activated, judge whether it is permitted to enter into a pseudo online state according to the threshold; the rule 2 is: the network entity responds to the MS with a location update accept message if pseudo online state is permitted by the pseudo online function unit at present. Based on the rule 3, the network entity further includes a pseudo online function unit, which is adapted to activate or deactivate the pseudo online function, and, after the pseudo online function is activated, judge whether pseudo online state is permitted at present according to the threshold; and, a roam judging unit, which is adapted to judge whether to permit the current MS to roam. The rule 3 is: the network entity responds to the MS with a location update accept message, if the pseudo online function unit permits pseudo online state at present and the roam judging unit determines to permit the MS to roam.

Preferably, based on the rule stored in the rule setting unit, the first embodiment of the network entity can further include a pseudo online function unit connected to the rule setting unit, as shown in Figure 9. Specifically, the network entity includes a receiving unit 91, a detecting unit 92, a judging unit 93, a responding unit 94, a rule setting unit 95, and a pseudo online function unit 96. Wherein, the functions and purposes of the receiving unit 91, detecting unit 92, judging unit 93, responding unit 94, and rule setting unit 95 are described in Figure 8; the pseudo online function unit 96 is adapted to activate or deactivate the pseudo online function, and, after the pseudo online function is activated, judge whether to permit the current MS to enter into pseudo online state, and send the judgment result to the responding unit 94.

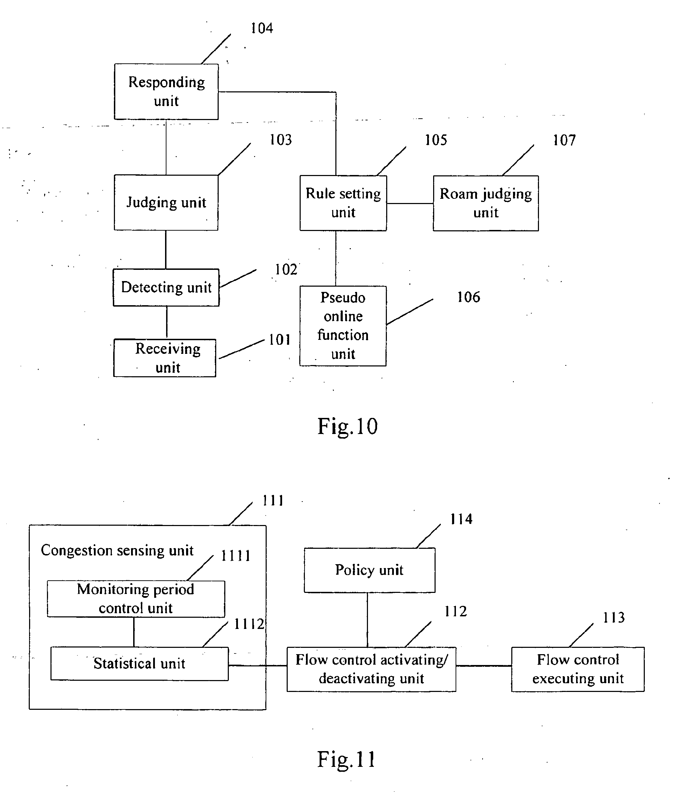

Based on the rule stored in the rule setting unit, the second embodiment of the network entity can further include a pseudo online function unit and a roam judging unit that are connected to the rule setting unit, as shown in Figure 10. Specifically, the network entity includes a receiving unit 101, a detecting unit 102, a judging unit 103, a responding unit 104, a rule setting unit 105, a pseudo online function unit 106, and a roam judging unit 107. Wherein, the functions and purposes of the receiving unit 101, detecting unit 102, judging unit 103, responding unit 104, rule setting unit 105, and pseudo online function unit 106 are identical to the functions and purposes of the corresponding units shown in Figure 9. The roam judging unit 107 is adapted to judge whether to permit the current MS to roam and send the judgement result to the responding unit, if the pseudo online function unit 106 permits the current MS to enter into pseudo online state.

Therefore, in the embodiment of the present invention, if deciding not to permit the MS that initiates the location update request to carry out location update, the network side further judges whether the predefined rule is met; if the predefined rule is met, the network side responds to the MS with a location update accept message, so that the MS will not initiate a further location update request temporarily; in this way, the embodiment of the present invention makes the user feel that he/she has connected to the network, and thereby improves the user's experience and saves the network resources.

When the MS requires to update his location and initiates a location update request again automatically, or when the MS initiates a service request, the network side will handle the request as described above. That is to say, if the network side determines not to permit the MS to carry out location update and the predefined rule is met, the network side responds to the MS with a location update accept message again; if the network side determines not to permit the MS to carry out location update and the predefined rule is not met, the network side responds to the MS with a location update reject message; if deciding to permit the current MS to carry out location update, the network side responds to the MS with a location update accept message, and accomplishes authentication and registration procedures for the MS.

Moreover, in order to enable the entities in the network to sense the Hard to Reach (HTR) of an entity according to the time delay of transaction processing, efficiently achieve link flow control and avoid network congestion, the network entity further includes a service network congestion controller. The service network congestion controller is connected with the receiving unit and the judging unit includes: a congestion sensing unit 111, a flow control activating/deactivating unit 112, and a flow control executing unit 113, as shown in Figure 11.

Wherein, the congestion sensing unit 111 is adapted to sense the link congestion condition in the process of the service message interaction between the equipment at local end and the equipment at opposite end. The flow control activating/deactivating unit 112 is adapted to activate or deactivate the flow control function according to the link congestion condition. For example, when the link congestion ratio exceeds a threshold, the unit 112 will activate the flow control function; when the link congestion ratio is lower than another threshold, the unit 112 will deactivate the flow control function. A policy unit 114 can be arranged in the unit 112, as shown in the figure. The policy unit 114 is adapted to set the flow control policies for activating and/or deactivating the flow control function and send the flow control policies to the flow control activating/deactivating unit.

The flow control executing unit 113 is adapted to carry out flow control for the link according to the command of the flow control activating/deactivating unit, for example, it can discard service messages according to a default flow control ratio, and discard the first message of service to be sent to the equipment at opposite end.

The congestion sensing unit can be implemented in a variety of forms, for example, as shown in the figure, the congestion sensing unit 111 includes: a monitoring period control unit 1111 and a statistical unit 1112. The monitoring period control unit 1111 is adapted to set the monitoring period, and carry out timing for the monitoring period; the statistical unit 1112 is adapted to perform statistics on the timeout events in the message interaction process, and, at the end of the timing of the monitoring unit for the monitoring period, calculate the service failure ratio in the monitoring period according to the timeout count in the message interaction process, so that the user can learn about the link congestion condition from the failure ratio.

The flow control process for the link is similar to the process described above in the description of the corresponding method in the embodiment of the present invention, and therefore will not be further detailed here.

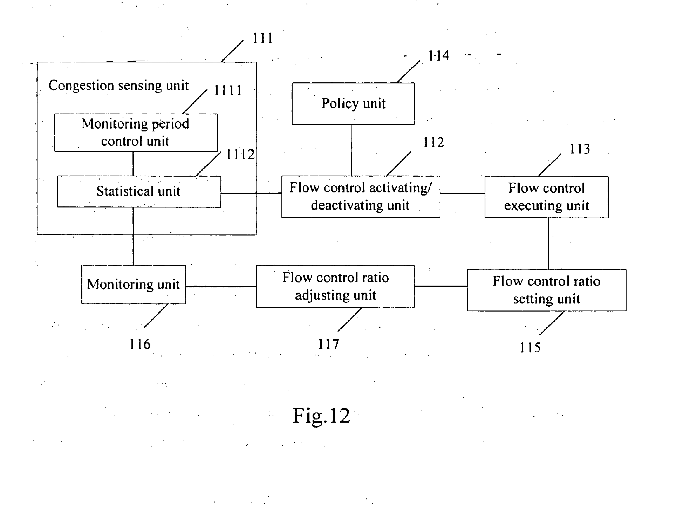

Referring to Figure 12, a principle block diagram of a second embodiment of the device for controlling service network congestion in the present invention

Different from the first embodiment of the device shown in Figure 12, this embodiment further includes a flow control ratio setting unit 115, a monitoring unit 116, and a flow control ratio adjusting unit 117

The flow control ratio setting unit 115 is connected to the flow control executing unit 113 is adapted to set the flow control ratio for determining the number of first messages of services to be discarded, so that the flow control executing unit 113 can determine the first messages of services to be discarded according to the flow control ratio

In order to further improve the flow control efficiency, the monitoring unit 116 connected to the statistical unit 1112 monitors the failure ratio in a monitoring period and the variation of the failure ratio in successive monitoring periods, and the flow control ratio adjusting unit 117 adjusts the current flow control ratio that is set by the flow control ratio setting unit for the link according to the monitoring result of the monitoring unit; if both the timeout ratios in two successive monitoring periods exceed the predefined threshold for flow control ratio adjustment, the flow control ratio adjusting unit 117 will increase the current flow control ratio for the link; if the timeout ratio in the previous monitoring period is lower than the threshold for flow control ratio adjustment, the flow control ratio adjusting unit 117 will decrease the current flow control ratio for the link. Alternatively, any other adjustment policies can be used to adjust the flow control ratio for the link

In this way, the flow control executing unit 113 can determine the ratio for discarding service messages according to the flow control ratio The higher the flow control ratio is, the higher the message discard ratio will be. Thus, the flow control efficiency can be improved, so that after a monitoring period, the congestion can be eliminated essentially, and the link will recover to normal.

The device provided in the present invention can be used in any network device that requires service interaction, so as to control the message traffic load on the link between the network device and any other network device, avoid accidents (e.g., system halt) for the devices under the impact of high traffic load, and ensure safe operation of the devices.

In addition, a method for controlling service network congestion is further provided in the embodiment of the present invention; the method includes:

> sensing the link congestion condition in the process of the service message interaction between the equipment at local end and the equipment at opposite end,
> activating or deactivating the control function according to the link congestion condition;
> discarding the first message of service to be sent to the equipment at opposite side, in the flow control activation process.

In this embodiment, the Hard to Reach (HTR) of an entity is sensed according to the time delay of transaction processing, and the link congestion condition is sensed in the process of the service message interaction between the equipment at local end and the equipment at opposite end; the flow control function is activated or deactivated according to the link congestion condition, and the first message of service to be sent to the equipment at opposite end is discarded in the flow control process. In order to further ensure the rationality and effectiveness of flow control, the current flow control ratio for the link can be adjusted in real time, and the ratio for discarding messages can be determined in proportion to the current flow control ratio for the link; the higher the flow control ratio is, the higher the ratio of discarded messages will be.

The implementation process of the embodiment is identical to the implementation process shown in Figure 5, and therefore will not be detailed further here.

In order to enable the entities in the network to sense the Hard to Reach (HTR) of an entity according to the time delay of transaction processing, efficiently achieve link flow control and avoid network congestion, a device for controlling service network congestion is further provided in the embodiment of the present invention. The device includes: a congestion sensing unit, a flow control activating/deactivating unit, and a flow control executing unit.

Alternatively, a policy unit can be arranged in the device, as shown in the figure. The policy unit is adapted to set the flow control policies for activating and/or deactivating the flow control function and send the flow control policies to the flow control activating/deactivating unit.

The congestion sensing unit can be implemented in a variety of forms, for example, the congestion sensing unit can include: a monitoring period control unit and a statistical unit. The monitoring period control unit is adapted to set the monitoring period, and carry out timing for the monitoring period; the statistical unit is adapted to perform statistics on the timeout events in the message interaction process, and, at the end of the timing of the monitoring unit for the monitoring period, calculate the service failure ratio in the monitoring period according to the timeout count in the message interaction process, so that the user can learn about the link congestion condition from the failure ratio

The detailed flow control process for the link is shown in Figure 11, and will not be further detailed here.

Moreover, a device for controlling service network congestion is further provided in the present invention. Different from the device described above, in this embodiment, the device further includes a flow control ratio setting unit, a monitoring unit, and a flow control ratio adjusting unit. The functions and purposes of the units are shown in Figure 12, and will not be further detailed here.

## Claims

1. A method for handling location update request between a Mobile Station, MS, and a network side, comprising:

> receiving (s1), by the network side, a location update request initiated from the MS;
> detecting, by the network side, current link congestion condition at the network side, and activating flow control function according to the link congestion condition;
> if the location update request is discarded by the flow control function; judging (s3), by the network side, whether a predefined rule is met, and

if the predefined rule is met responding (s4), by the network side, to the MS with a location update accept message.

2. The method according to claim 1, further comprising, if the location update request is discarded by the flow control function, responding (207) to the MS with a location update reject message if the predefined rule is not met.

3. The method according to claim 1 or 2, wherein, the predefined rule comprises:

   responding to the MS with a location update accept message directly, if location update is not permitted for the MS.

4. The method according to claim 1 or 2, wherein, the predefined rule comprises:

   permitting the current MS to enter into pseudo online state; or, permitting the current MS to enter into pseudo online state and roam.

5. The method according to any one of claims 1-4, wherein, the process of detecting the link congestion condition comprises:

   setting (501) a monitoring period;
   performing (502) statistics on the service failure ratio in the monitoring period; and
   determining (503) the link congestion condition according to the failure ratio.

6. The method according to claim 5, wherein, the procedure of activating the flow control function according to the link congestion condition comprises:

   activating (507) the flow control function if the failure ratio exceeds the predefined threshold for flow control activation in the preset monitoring period; otherwise deactivating (508) the flow control function.

7. The method according to claim 6, wherein, when the flow control function is activated according to the link congestion condition, the first message of a service to be sent to the equipment at opposite side is discarded (605) according to the current flow control ratio for the link.

8. The method according to claim 7, wherein, the method further comprises,
   adjusting (506) the current flow control ratio for the link in real time according to the failure ratio.

9. The method according to claim 8, wherein, the process of adjusting the flow control ratio in real time according to the failure ratio comprises,
   increasing the flow control ratio, if both the failure ratios in two successive monitoring periods exceed the predefined threshold for flow control ratio adjustment; and
   decreasing the flow control ratio, if the failure ratio in the previous monitoring period is lower than the predefined threshold for flow control ratio adjustment.

10. The method according to claim 7, wherein, the method further comprises,
    classifying the services, and setting priorities for the types of services; and
    discarding service messages with lower priorities, if a variety of services exist in the equipment at local end.

11. The method according to claim 7, wherein, the method further comprises,
    activating (606) a congestion sensing timer to sense the link congestion condition when an authentication set is retrieved or the location update request is sent, in the location update service for the MS.

12. The method according to claim 1, wherein, the method further comprises,
    sensing (601), by the network side, the link congestion condition at the network side in a process of service message interaction between an equipment at local end and an equipment at opposite end;
    activating or deactivating (602), by the network side, flow control function according to the link congestion condition; and
    discarding (605), by the network side, first message of a service to be sent to the equipment at opposite side, in the flow control activation process.

**13.** A network entity, comprising.

a receiving unit (81), adapted to receive a location update request from a Mobile Station, MS;

a detecting unit (82), adapted to detect current link congestion condition at the network side;

a judging unit (83), adapted to judge whether the location update request is discarded by flow control function after the flow control function is activated according to the link congestion condition, and, if the location update request is discarded and location update is not permitted for the MS, further judge whether a predefined rule is melt; and

a responding unit (84), adapted to respond to the MS with a location update accept message, if the judging unit judges the predefined rule is met.

**14.** The network entity according to claim 13, wherein, the entity further comprises a rule setting unit (85) adapted to store the predefined rule; the predefined rule comprises:

responding to the MS with a location update accept message directly, if location update is not permitted for the MS; or, permitting the current MS to enter into pseudo online state; or, permitting the current MS to enter into pseudo online state and roam.

**15.** The network entity according to claim 13, wherein, the network entity further comprises: a pseudo online function unit (96) adapted to activate or deactivate the pseudo online function, and, after the pseudo online function is activated, judge whether to permit the current MS to enter into pseudo online state, and send the judgment result to the responding unit.

**16.** The network entity according to claim 15, wherein, the network entity further comprises: a roam judging unit (107), adapted to judge whether to permit the current MS to roam and send the judgment result to the responding unit, if the pseudo online function unit permits the current MS to enter into pseudo online state.

**17.** The network entity according to claim 13, wherein, the network entity further comprises:

a congestion sensing unit (111), adapted to sense the link congestion condition in the process of service message interaction between the equipment at local end and the equipment at opposite end, after the network side receives the location update request initiated from the MS;

a flow control activating/deactivating unit (112), adapted to activate or deactivate the flow control function according to the link congestion condition; and

a flow control executing unit (113), adapted to carry out flow control for the link according to the command of the flow control activating/deactivating unit, and discard the first message of a service to be sent to the equipment at opposite end in the flow control process.

**18.** The network entity according to claim 17, wherein, the congestion sensing unit comprises:

a monitoring period control unit (1111), adapted to set a monitoring period and carry out timing for the monitoring period; and

a statistical unit (1112), adapted to perform statistics on timeout events in message interaction process, and, at the end of the timing of the monitoring unit for the monitoring period, calculate service failure ratio in the monitoring period according to the timeout count in the message activation process, and determine the link congestion condition according to the failure ratio.

**19.** The network entity according to claim 17 or 18, wherein, the network entity further comprises:

a flow control ratio setting unit (115), adapted to set flow control ratio for determining the number of the first messages of services to be discarded and provide the flow control ratio to the flow control executing unit.

**20.** The network entity according to claim 17 or 18, wherein, the network entity further comprises:

a monitoring unit (116), connected to the statistical unit, and adapted to monitor the failure ratio in a monitoring period and variation of the failure ratio in successive monitoring periods; and

a flow control ratio adjusting unit (117), adapted to adjust current flow control ratio set by the flow control ratio setting unit for the link according to the monitoring result of the monitoring unit, and, if both the timeout ratios in two successive monitoring periods exceed the predefined threshold for flow control ratio adjustment, increase the current flow control ratio for the link; if the timeout ratio in the previous monitoring period is lower than the threshold for flow control ratio adjustment, decrease the current flow control ratio for the link.

21. The network entity according to claim 17 or 18, wherein, the network entity further comprises:

a policy unit (114), adapted to set flow control policies for activating and/or deactivating the flow control function and send the flow control policies to the flow control activating/deactivating unit.

22. The network entity according to claim 13, further comprising:

a congestion sensing unit (111), adapted to sense the link congestion condition at the network side in a process of service message interaction between an equipment at local end and an equipment at opposite end;
a flow control activating/deactivating unit (112), adapted to activate or deactivate flow control function according to the link congestion condition; and
a flow control executing unit (113), adapted to carry out flow control for the link according to the command of the flow control activating/deactivating unit, and discard the first message of a service to be sent to the equipment at opposite end in the flow control process.

**Patentansprüche**

1. Verfahren zum Behandeln einer Ortsaktualisierungsanforderung zwischen einer Mobilstation MS und einer Netzseite, welches folgende Schritte aufweist:

Empfangen (s1), durch die Netzseite, einer von der MS eingeleiteten Ortsaktualisierungsanforderung,
Erkennen, durch die Netzseite, einer aktuellen Verbindungsüberlastungsbedingung auf der Netzseite und Aktivieren einer Flusssteuerfunktion entsprechend der Verbindungsüberlastungsbedingung,
falls die Ortsaktualisierungsanforderung von der Flusssteuerfunktion verworfen wird, Beurteilen (s3), durch die Netzseite, ob eine vordefinierte Regel erfüllt ist, und
falls die vordefinierte Regel erfüllt ist, Antworten (s4), durch die Netzseite, der MS mit einer Ortsaktualisierungsakzeptiernachricht.

2. Verfahren nach Anspruch 1, welches ferner, falls die Ortsaktualisierungsanforderung von der Flusssteuerfunktion verworfen wird, Folgendes aufweist: Antworten (207) der MS mit einer Ortsaktualisierungsverweigerungsnachricht, falls die vordefinierte Regel nicht erfüllt ist.

3. Verfahren nach Anspruch 1 oder 2, wobei die vordefinierte Regel Folgendes aufweist: Antworten der MS direkt mit einer Ortsaktualisierungsakzeptiernachricht, falls eine Ortsaktualisierung für die MS nicht erlaubt ist.

4. Verfahren nach Anspruch 1 oder 2, wobei die vordefinierte Regel Folgendes aufweist: Erlauben der aktuellen MS, in einen Pseudoonlinezustand einzutreten, oder Erlauben der aktuellen MS, in einen Pseudoonlinezustand einzutreten und zu roamen.

5. Verfahren nach einem der Ansprüche 1 - 4, wobei der Prozess des Erkennens der Verbindungsüberlastungsbedingung Folgendes aufweist:

Festlegen (501) einer Überwachungsperiode,
Ausführen (502) einer Statistik über das Dienstausfallverhältnis in der Überwachungsperiode und
Bestimmen (503) der Verbindungsüberlastungsbedingung entsprechend dem Ausfallverhältnis.

6. Verfahren nach Anspruch 5, wobei die Prozedur des Aktivierens der Flusssteuerfunktion entsprechend der Verbindungsüberlastungsbedingung Folgendes aufweist:

Aktivieren (507) der Flusssteuerfunktion, falls das Ausfallverhältnis die vordefinierte Schwelle für die Flusssteueraktivierung in der vorgegebenen Überwachungsperiode überschreitet; andernfalls Deaktivieren (508) der Flusssteuerfunktion.

7. Verfahren nach Anspruch 6, wobei, wenn die Flusssteuerfunktion entsprechend der Verbindungsüberlastungsbedingung aktiviert wird, die erste Nachricht eines Dienstes, die zum Gerät auf der entgegengesetzten Seite zu senden ist, entsprechend dem aktuellen Flusssteuerverhältnis für die Verbindung verworfen wird (605).

8. Verfahren nach Anspruch 7, wobei das Verfahren ferner Folgendes aufweist:

   Einstellen (506) des aktuellen Flusssteuerverhältnisses für die Verbindung in Echtzeit entsprechend dem Ausfallverhältnis.

9. Verfahren nach Anspruch 8, wobei der Prozess des Einstellens des Flusssteuerverhältnisses in Echtzeit entsprechend dem Ausfallverhältnis Folgendes aufweist:

   Erhöhen des Flusssteuerverhältnisses, falls beide Ausfallverhältnisse in zwei aufeinanderfolgenden Überwachungsperioden die vordefinierte Schwelle für die Flusssteuerverhältniseinstellung überschreiten, und Verringern des Flusssteuerverhältnisses, falls das Ausfallverhältnis in der vorhergehenden Überwachungsperiode kleiner als die vordefinierte Schwelle für die Flusssteuerverhältniseinstellung ist.

10. Verfahren nach Anspruch 7, wobei das Verfahren ferner Folgendes aufweist:

    Klassifizieren der Dienste und Festlegen von Prioritäten für die Diensttypen und
    Verwerfen von Dienstnachrichten mit niedrigeren Prioritäten, falls eine Vielzahl von Diensten im Gerät am lokalen Ende existiert.

11. Verfahren nach Anspruch 7, wobei das Verfahren ferner Folgendes aufweist:

    Aktivieren (606) eines Überlastungserfassungszeitgebers zum Erfassen der Verbindungsüberlastungsbedingung, wenn ein Authentifizierungssatz abgerufen wird oder die Ortsaktualisierungsanforderung gesendet wird, im Ortsaktualisierungsdienst für die MS.

12. Verfahren nach Anspruch 1, wobei das Verfahren ferner Folgendes aufweist:

    Erfassen (601), durch die Netzseite, der Verbindungsüberlastungsbedingung auf der Netzseite in einem Prozess einer Dienstnachrichteninteraktion zwischen einem Gerät am lokalen Ende und einem Gerät am entgegengesetzten Ende,
    Aktivieren oder Deaktivieren (602), durch die Netzseite, einer Flusssteuerfunktion entsprechend der Verbindungsüberlastungsbedingung und
    Verwerfen (605), durch die Netzseite, der zum Gerät auf der entgegengesetzten Seite zu sendenden ersten Nachricht eines Dienstes im Flusssteueraktivierungsprozess.

13. Netzeinheit, welche Folgendes aufweist:

    eine Empfangseinheit (81), die dafür eingerichtet ist, eine Ortsaktualisierungsanforderung von einer Mobilstation MS zu empfangen,
    eine Erkennungseinheit (82), die dafür eingerichtet ist, eine aktuelle Verbindungsüberlastungsbedingung auf der Netzseite zu erkennen,
    eine Beurteilungseinheit (83), die dafür eingerichtet ist, zu beurteilen, ob die Ortsaktualisierungsanforderung von der Flusssteuerfunktion verworfen wird, nachdem die Flusssteuerfunktion entsprechend der Verbindungsüberlastungsbedingung aktiviert wurde, und, falls die Ortsaktualisierungsanforderung verworfen wird und eine Ortsaktualisierung für die MS nicht erlaubt ist, ferner zu beurteilen, ob eine vordefinierte Regel erfüllt ist, und
    eine Antworteinheit (84), die dafür eingerichtet ist, der MS mit einer Ortsaktualisierungsakzeptiernachricht zu antworten, falls die Beurteilungseinheit feststellt, dass die vordefinierte Regel erfüllt ist.

14. Netzeinheit nach Anspruch 13, wobei die Einheit ferner eine Regelfestlegungseinheit (85) aufweist, die dafür eingerichtet ist, die vordefinierte Regel zu speichern, wobei die vordefinierte Regel Folgendes aufweist:

    Antworten der MS direkt mit einer Ortsaktualisierungsakzeptiernachricht, falls eine Ortsaktualisierung für die MS nicht erlaubt ist, oder Erlauben der aktuellen MS, in einen Pseudoonlinezustand einzutreten, oder Erlauben der aktuellen MS, in einen Pseudoonlinezustand einzutreten und zu roamen.

15. Netzeinheit nach Anspruch 13, wobei die Netzeinheit ferner Folgendes aufweist: eine Pseudoonlinefunktionseinheit (96), die dafür eingerichtet ist, die Pseudoonlinefunktion zu aktivieren oder zu deaktivieren und, nachdem die Pseudoonlinefunktion aktiviert wurde, zu beurteilen, ob es der aktuellen MS erlaubt werden soll, in den Pseudoonlinezustand einzutreten, und das Beurteilungsergebnis zur Antworteinheit zu senden.

16. Netzeinheit nach Anspruch 15, wobei die Netzeinheit ferner Folgendes aufweist: eine Roambeurteilungseinheit (107), die dafür eingerichtet ist zu beurteilen, ob es der aktuellen MS erlaubt werden soll zu roamen, und das Beurteilungsergebnis zur Antworteinheit zu senden, falls die Pseudoonlinefunktionseinheit der aktuellen MS erlaubt, in den Pseudoonlinezustand einzutreten.

17. Netzeinheit nach Anspruch 13, wobei die Netzeinheit ferner Folgendes aufweist:

eine Überlastungserfassungseinheit (111), die dafür eingerichtet ist, die Verbindungsüberlastungsbedingung im Prozess der Dienstnachrichteninteraktion zwischen dem Gerät am lokalen Ende und dem Gerät am entgegengesetzten Ende zu erfassen, nachdem die Netzseite die von der MS eingeleitete Ortsaktualisierungsanforderung empfangen hat,
eine Flusssteueraktivierungs-/Deaktivierungseinheit (112), die dafür eingerichtet ist, die Flusssteuerfunktion entsprechend der Verbindungsüberlastungsbedingung zu aktivieren oder zu deaktivieren, und
eine Flusssteuerausführungseinheit (113), die dafür eingerichtet ist, eine Flusssteuerung für die Verbindung entsprechend dem Befehl der Flusssteueraktivierungs-/ Deaktivierungseinheit auszuführen und die zum Gerät am entgegengesetzten Ende im Flusssteuerprozess zu sendende erste Nachricht eines Dienstes zu verwerfen.

18. Netzeinheit nach Anspruch 17, wobei die Überlastungserfassungseinheit Folgendes aufweist:

eine Überwachungsperiodensteuereinheit (1111), die dafür eingerichtet ist, eine Überwachungsperiode festzulegen und eine Zeitsteuerung für die Überwachungsperiode auszuführen, und
eine Statistikeinheit (1112), die dafür eingerichtet ist, eine Statistik an Zeitüberschreitungsereignissen im Nachrichteninteraktionsprozess auszuführen und am Ende der Zeitsteuerung der Überwachungseinheit für die Überwachungsperiode das Dienstausfallverhältnis in der Überwachungsperiode entsprechend dem Zeitüberschreitungszählwert im Nachrichtenaktivierungsprozess zu berechnen und die Verbindungsüberlastungsbedingung entsprechend dem Ausfallverhältnis zu bestimmen.

19. Netzeinheit nach Anspruch 17 oder 18, wobei die Netzeinheit ferner Folgendes aufweist:

eine Flusssteuerverhältnisfestlegungseinheit (115), die dafür eingerichtet ist, das Flusssteuerverhältnis zum Bestimmen der Anzahl der zu verwerfenden ersten Nachrichten von Diensten zu bestimmen und das Flusssteuerverhältnis der Flusssteuerausführungseinheit bereitzustellen.

20. Netzeinheit nach Anspruch 17 oder 18, wobei die Netzeinheit ferner Folgendes aufweist:

eine Überwachungseinheit (116), die mit der Statistikeinheit verbunden ist und dafür eingerichtet ist, das Ausfallverhältnis in einer Überwachungsperiode und die Änderung des Ausfallverhältnisses in aufeinanderfolgenden Überwachungsperioden zu überwachen, und
eine Flusssteuerverhältniseinstellungseinheit (117), die dafür eingerichtet ist, das von der Flusssteuerverhältnisfestlegungseinheit für die Verbindung festgelegte aktuelle Flusssteuerverhältnis entsprechend dem Überwachungsergebnis der Überwachungseinheit einzustellen und, falls beide Zeitüberschreitungsverhältnisse in zwei aufeinanderfolgenden Überwachungsperioden die vordefinierte Schwelle für die Flusssteuerverhältniseinstellung überschreiten, das aktuelle Flusssteuerverhältnis für die Verbindung zu erhöhen und, falls das Zeitüberschreitungsverhältnis in der vorhergehenden Überwachungsperiode kleiner als die Schwelle für die Flusssteuerverhältniseinstellung ist, das aktuelle Flusssteuerverhältnis für die Verbindung zu verringern.

21. Netzeinheit nach Anspruch 17 oder 18, wobei die Netzeinheit ferner Folgendes aufweist:

eine Richtlinieneinheit (114), die dafür eingerichtet ist, Flusssteuerrichtlinien zum Aktivieren und/oder Deaktivieren der Flusssteuerfunktion festzulegen und die Flusssteuerrichtlinien zur Flusssteueraktivierungs-/Deaktivierungseinheit zu senden.

22. Netzeinheit nach Anspruch 13, welche ferner Folgendes aufweist:

eine Überlastungserfassungseinheit (111), die dafür eingerichtet ist, die Verbindungsüberlastungsbedingung auf der Netzseite in einem Prozess einer Dienstnachrichteninteraktion zwischen einem Gerät am lokalen Ende und einem Gerät am entgegengesetzten Ende zu erfassen,

eine Flusssteueraktivierungs-/Deaktivierungseinheit (112), die dafür eingerichtet ist, die Flusssteuerfunktion entsprechend der Verbindungsüberlastungsbedingung zu aktivieren oder zu deaktivieren, und

eine Flusssteuerausführungseinheit (113), die dafür eingerichtet ist, eine Flusssteuerung für die Verbindung entsprechend dem Befehl der Flusssteueraktivierungs-/ Deaktivierungseinheit auszuführen und die zum Gerät am entgegengesetzten Ende im Flusssteuerprozess zu sendende erste Nachricht eines Dienstes zu verwerfen.

## Revendications

1. Procédé de gestion d'une demande de mise à jour de position entre une Station Mobile, MS (Mobile Station), et un côté réseau, comprenant :

   la réception (s1), par le côté réseau, d'une demande de mise à jour de position déclenchée depuis la MS ;
   la détection, par le côté réseau, d'une condition de congestion de liaison courante au niveau du côté réseau, et l'activation d'une fonction de régulation de débit conformément à la condition de congestion de liaison ;
   si la demande de mise à jour de position est rejetée par la fonction de régulation de débit, l'évaluation (s3), par le côté réseau, du fait de savoir si une règle prédéfinie est satisfaite ; et
   si la règle prédéfinie est satisfaite, la réponse (s4), par le côté réseau, à la MS, par un message d'acceptation de mise à jour de position.

2. Procédé selon la revendication 1, comprenant en outre, si la demande de mise à jour de positon est rejetée par la fonction de régulation de débit, la réponse (207) à la MS par un message de rejet de mise à jour de position si la règle prédéfinie n'est pas satisfaite.

3. Procédé selon la revendication 1 ou 2, dans lequel la règle prédéfinie comprend : la réponse directe à la MS par un message d'acceptation de mise à jour de position, si la mise à jour de position n'est pas permise pour la MS.

4. Procédé selon la revendication 1 ou 2, dans lequel la règle prédéfinie comprend : le fait de permettre à la MS courante de passer dans un état pseudo-en ligne ; ou le fait de permettre à la MS courante de passer dans un état pseudo-en ligne et itinérant.

5. Procédé selon l'une quelconque des revendications 1-4, dans lequel le processus de détection de la condition de congestion de liaison comprend :

   le réglage (501) d'une période de surveillance ;
   le calcul (502) de statistiques sur le rapport d'échec de service pendant la période de surveillance ; et
   la détermination (503) de la condition de congestion de liaison conformément au rapport d'échec.

6. Procédé selon la revendication 5, dans lequel la procédure d'activation de la fonction de régulation de débit conformément à la condition de congestion de liaison comprend :

   l'activation (507) de la fonction de régulation de débit si le rapport d'échec dépasse le seuil prédéfini pour l'activation de la régulation de débit pendant la période de surveillance préréglée ; et dans le cas contraire, la désactivation (508) de la fonction de régulation de débit.

7. Procédé selon la revendication 6, dans lequel, lorsque la fonction de régulation de débit est activée conformément à la condition de congestion de liaison, le premier message d'un service devant être envoyé à l'équipement se trouvant du côté opposé est rejeté (605) conformément au rapport de régulation de débit courant pour la liaison.

8. Procédé selon la revendication 7, dans lequel le procédé comprend en outre :

   l'ajustement (506) en temps réel du rapport de régulation de débit courant pour la liaison conformément au rapport d'échec.

9. Procédé selon la revendication 8, dans lequel le processus d'ajustement en temps réel du rapport de régulation de débit conformément au rapport d'échec comprend :

l'augmentation du rapport de régulation de débit si les deux rapports d'échec pendant deux périodes de surveillance successives dépassent le seuil prédéfini pour l'ajustement du rapport de régulation de débit ; et la réduction du rapport de régulation de débit si le rapport d'échec pendant la période de surveillance précédente est inférieur au seuil prédéfini pour l'ajustement du rapport de régulation de débit.

10. Procédé selon la revendication 7, dans lequel le procédé comprend en outre :

la classification des services et le réglage de priorités pour les types de services ; et le rejet de messages de services ayant des priorités plus faibles s'il existe une variété de services dans l'équipement se trouvant à l'extrémité locale.

11. Procédé selon la revendication 7, dans lequel le procédé comprend en outre :

l'activation (606) d'une temporisation de détection de congestion pour détecter la condition de congestion de liaison lorsqu'une authentification réglée est extraite ou lorsque la demande de mise à jour de position est envoyée, dans le service de mise à jour de position destiné à la MS.

12. Procédé selon la revendication 1, dans lequel le procédé comprend en outre :

la détection (601), par le côté réseau, de la condition de congestion de liaison au niveau du côté réseau pendant un processus d'interaction de messages de services entre un équipement se trouvant à l'extrémité locale et un équipement se trouvant à l'extrémité opposée ; l'activation ou la désactivation (602), par le côté réseau, d'une fonction de régulation de débit conformément à la condition de congestion de liaison ; et le rejet (605), par le côté réseau, du premier message d'un service devant être envoyé à l'équipement se trouvant du côté opposé, pendant le processus d'activation de la régulation de débit.

13. Entité de réseau, comprenant :

une unité de réception (81), apte à recevoir une demande de mise à jour de position d'une Station Mobile, MS ; une unité de détection (82), apte à détecter une condition de congestion de liaison courante au niveau du côté réseau ; une unité d'évaluation (83), apte à évaluer si la demande de mise à jour de position est rejetée par la fonction de régulation de débit, après que la fonction de régulation de débit a été activée conformément à la condition de congestion de liaison et, si la demande de mise à jour de position est rejetée et si la mise à jour de position n'est pas permise pour la MS, à évaluer en outre si une règle prédéfinie est satisfaite ; et une unité de réponse (84), apte à répondre à la MS par un message d'acceptation de mise à jour de position, si l'unité d'évaluation évalue que la règle prédéfinie est satisfaite.

14. Entité de réseau selon la revendication 13, dans laquelle l'entité comprend en outre une unité de réglage de règles (85) apte à stocker la règle prédéfinie ; la règle prédéfinie comprenant :

la réponse directe à la MS par un message d'acceptation de mise à jour de position, si la mise à jour de position n'est pas permise pour la MS ; ou le fait de permettre à la MS courante de passer dans un état pseudo-en ligne ; ou le fait de permettre à la MS courante de passer dans un état pseudo-en ligne et itinérant.

15. Entité de réseau selon la revendication 13, dans laquelle l'entité de réseau comprend en outre : une unité à fonction pseudo-en ligne (96) apte à activer ou désactiver la fonction pseudo-en ligne et, après que la fonction pseudo-en ligne a été activée, à évaluer s'il convient de permettre à la MS courante de passer dans l'état pseudo-en ligne et à envoyer le résultat de l'évaluation à l'unité de réponse.

16. Entité de réseau selon la revendication 15, dans laquelle l'entité de réseau comprend en outre : une unité d'évaluation d'itinérance (107), apte à évaluer s'il convient de permettre à la MS courante d'être itinérante et à envoyer le résultat de l'évaluation à l'unité de réponse si l'unité à fonction pseudo-en ligne permet à la MS courante de passer dans l'état pseudo-en ligne.

**17.** Entité de réseau selon la revendication 13, dans laquelle l'entité de réseau comprend en outre : une unité de détection de congestion (111), apte à détecter la condition de congestion de liaison lors du processus d'interaction de messages de services entre l'équipement se trouvant à l'extrémité locale et l'équipement se trouvant à l'extrémité opposée, après que le côté réseau a reçu la demande de mise à jour de position déclenchée depuis la MS ; une unité d'activation/désactivation de régulation de débit (112), apte à activer ou désactiver la fonction de régulation de débit conformément à la condition de congestion de liaison ; et une unité d'exécution de régulation de débit (113), apte à effectuer une régulation de débit pour la liaison conformément à la commande de l'unité d'activation/désactivation de régulation de débit, et à rejeter le premier message d'un service devant être envoyé à l'équipement se trouvant à l'extrémité opposée lors du processus de régulation de débit.

**18.** Entité de réseau selon la revendication 17, dans laquelle l'unité de détection de congestion comprend :

une unité de régulation de période de surveillance (1111), apte à régler une période de surveillance et à effectuer une temporisation pour la période de surveillance ; et
une unité statistique (1112), apte à calculer des statistiques concernant des événements de dépassement de temps limite lors d'un processus d'interaction de messages et, à la fin de la temporisation de l'unité de surveillance pendant la période de surveillance, calculer le rapport d'échec de service pendant la période de surveillance conformément au compte de dépassements de temps limite lors du processus d'activation de message, et déterminer la condition de congestion de liaison conformément au rapport d'échec.

**19.** Entité de réseau selon la revendication 17 ou 18, dans laquelle l'entité de réseau comprend en outre :

une unité de réglage de rapport de régulation de débit (115), apte à régler un rapport de régulation de débit pour déterminer le nombre des premiers messages de services devant être rejetés et fournir le rapport de régulation de débit à l'unité d'exécution de régulation de débit.

**20.** Entité de réseau selon la revendication 17 ou 18, dans laquelle l'entité de réseau comprend en outre :

une unité de surveillance (116), connectée à l'unité statistique, et apte à surveiller le rapport d'échec pendant une période de surveillance et la variation du rapport d'échec lors de périodes de surveillance successives ; et
une unité d'ajustement de rapport de régulation de débit (117), apte à ajuster le rapport de régulation de débit courant réglé par l'unité de réglage de rapport de régulation de débit pour la liaison conformément au résultat de surveillance de l'unité de surveillance et, si les deux rapports de dépassement de temps limite pendant deux périodes de surveillance successives dépassent le seuil prédéfini pour l'ajustement du rapport de régulation de débit, à augmenter le rapport de régulation de débit courant pour la liaison ; si le rapport de dépassement de temps limite pendant la période de surveillance précédente est inférieur au seuil destiné à l'ajustement du rapport de régulation de débit, à réduire le rapport de régulation de débit courant pour la liaison.

**21.** Entité de réseau selon la revendication 17 ou 18, dans laquelle l'entité de réseau comprend en outre :

une unité de réglage de règles (114), apte à régler des règles de régulation de débit pour activer et/ou désactiver la fonction de régulation de débit et envoyer les règles de régulation de débit à l'unité d'activation/désactivation de régulation de débit.

**22.** Entité de réseau selon la revendication 13, comprenant en outre :

une unité de détection de congestion (111), apte à détecter la condition de congestion de liaison au niveau du côté réseau lors d'un processus d'interaction de messages de services entre un équipement se trouvant à l'extrémité locale et un équipement se trouvant à l'extrémité opposée ;
une unité d'activation/désactivation de régulation de débit (112), apte à activer ou désactiver la fonction de régulation de débit conformément à la condition de congestion de liaison ; et
une unité d'exécution de régulation de débit (113), apte à effectuer une régulation de débit pour la liaison conformément à la commande de l'unité d'activation/désactivation de régulation de débit, et à rejeter le premier message d'un service devant être envoyé à l'équipement se trouvant à l'extrémité opposée lors du processus de régulation de débit.

Fig.1

Fig.2

| MS | 201、 Location<br>Update Request | MSC/VLR | | HLR |

The MS is in pseudo online state,
and the user data in the VLR is
not verified by the HLR

202、 Has
the flow control
function been activated
and has the packet of
the message been
discarded?

N

203、
MAP_UPDATE_LOCATION_
REQ
MAP_SEND_AUTHENTICAT
ION_INFO_Req

Y

204、 MAP_P_Abort
MAP_U_Abort

207、 Location Update
Reject

N

205、 Is
pseudo online state
permitted?

206、 Location Update
Accept

Y

# Fig.3

MS　　　　　MSC/VLR　　　　　HLR

301、 CM Service Request

The MS is in pseudo online state,
and the user data in the VLR is not
verified by the HLR

302、 CM Service Reject

303、 Location Update Request

The MS is in pseudo online state,
and the user data in the VLR is not
verified by the HLR

304、 Has
the flow control
function been activated
and has the packet of
the message been
discarded?

N

305、
MAP_UPDATE_LOCATION_
Req
MAP_SEND_AUTHENTICAT
ION_INFO_Req

Y

306、 MAP_P_Abort
MAP_U_Abort

310、 Location Update
Reject

N

307、 Is
pseudo online state
permitted?

Y

310、 Location Update
Reject

N

308、 Is roaming
permitted?

309、 Location Update
Accept

Y

Fig.4

Fig.5

The equipment at local end carries out message interaction with the equipment at opposite end — 601

Has the flow control function been activated? — 602

N

Y

Is the message a message within the range of the flow control ratio? — 603

Y

Is the message the first message of the service? — 604

Y

Discard the message, and abort the current service — 605

N

N

Send the message, and activate the congestion sensing timer — 606

Fig.6

MS

MSC/VLR

HLR

701. Location update request

702. Judge whether there is congestion

Y

N

703. Authentication set request or location update request

Activate the congestion sensing timer

705. Discard the location update request

704. Is the packet of the message discarded?

Y

N

Activate the congestion sensing timer

706. Authentication set request or location update request

Fig.7

84

Responding
unit

83

Judging unit

85

Rule setting
unit

82

Detecting unit

81

Receiving
unit

Fig.8

94

Responding
unit

93

Judging unit

95

Rule
setting unit

92

Detecting unit

96

Pseudo
online
function
unit

91

Receiving
unit

Fig.9

104

Responding
unit

103

Judging unit

105          107

Rule setting
unit

Roam judging
unit

Detecting unit          102

Pseudo
online
function
unit          106

Receiving
unit          101

Fig.10

111

Congestion sensing unit          1111

Monitoring period
control unit

114

Policy unit

112          113

Statistical unit          1112

Flow control activating/
deactivating unit

Flow control
executing unit

Fig.11

Fig.12

**EP 2 083 579 B1**

**REFERENCES CITED IN THE DESCRIPTION**

**Patent documents cited in the description**

- WO 002001097548 A1